# EUROPEAN PATENT SPECIFICATION

(11) **EP 2 367 218 B1**
(45) Date of publication and mention of the grant of the patent: **25.12.2019**
(21) Application number: 11250274.5
(22) Date of filing: 09.03.2011
(51) Int. Cl.: H01M 2/02, H01M 2/08

(54) **Secondary battery**
Sekundärbatterie
Batterie secondaire

(30) Priority: 09.03.2010 US 312125 P; 04.02.2011 US 21678
(43) Date of publication of application: 21.09.2011
(73) Proprietor: Samsung SDI Co., Ltd., Yongin-si, Gyeonggi-do (KR)
(72) Inventor: Jaehyung, Kim, Yongin-si, Gyeonggi-do (KR)
(74) Representative: Mounteney, Simon James

(56) References cited:
- EP-A1- 0 917 217
- EP-A1- 1 315 219
- EP-A1- 2 333 869
- US-A- 5 556 722
- US-A1- 2004 126 657
- US-A1- 2004 166 406
- US-A1- 2009 186 270
- US-A1- 2009 191 448

## Description

The present invention relates to a secondary battery.

### BACKGROUND ART

A secondary (rechargeable) battery typically includes a bare cell. The bare cell usually includes an electrode assembly having a positive electrode plate, a negative electrode plate, and a separator, and a case for receiving the electrode assembly.

In general, the case of a bare cell is formed as an aluminum can or a composite aluminum pouch.

When the case is formed as an aluminum can, it is heavy but has a high strength. By contrast, when the case is formed as a composite aluminum pouch, it has relatively low strength, but is lightweight.

The present invention sets-out to provide a secondary battery which can offer improved resistance against external impacts, yet have low weight. The invention also seeks to provide a secondary battery in which the sealing efficiency of the bare cell case is improved.

### TECHNICAL SOLUTION

According to the present invention, there is provided a secondary battery as set out in Claim 1.

Preferred features of the invention are set out in Claims 2 to 10.

### ADVANTAGEOUS EFFECT

In a secondary battery according to the invention, a hard case surrounding an electrode assembly may be formed that is lightweight and strong, thereby increasing the resistance against external impacts and realizing lightness in a simplified manner.

In addition, since the secondary battery includes a case constituted by a first case portion and a second case portion, which are coupled to each other by an adhesion layer, the sealing efficiency of the hard case can be enhanced.

### BRIEF DESCRIPTION OF THE DRAWINGS

Embodiments of the invention and reference embodiments which aid the understanding of the invention will now be described by way of example and with reference to the accompanying drawings, in which:
FIG. 1 is an assembled perspective view of a secondary battery according to a reference embodiment;
FIG. 2 is a disassembled perspective view of the secondary battery shown in FIG. 1;
FIG. 3 is a sectional view taken along line A-A' of FIG. 1;
FIG. 4 is a sectional view illustrating components corresponding to those of the secondary battery shown in FIG. 3 in a secondary battery according to another reference embodiment;
FIG. 5 is a sectional view illustrating components corresponding to those of the secondary battery shown in FIG. 3 in a secondary battery according to still another reference embodiment;
FIG. 6 is a sectional view illustrating components corresponding to those of the secondary battery shown in FIG. 3 in a secondary battery according to still another reference embodiment;
FIG. 7 is a sectional view illustrating components corresponding to those of the secondary battery shown in FIG. 3 in a secondary battery according to an embodiment of the present invention;
FIG. 8 is a sectional view illustrating components corresponding to those of the secondary battery shown in FIG. 3 in a secondary battery according to still another reference embodiment;
FIG. 9 is a sectional view illustrating components corresponding to those of the secondary battery shown in FIG. 3 in a secondary battery according to still another reference embodiment;
FIG. 10 is a sectional view illustrating components corresponding to those of the secondary battery shown in FIG. 3 in a secondary battery according to still another reference embodiment;
FIG. 11 is a sectional view illustrating components corresponding to those of the secondary battery shown in FIG. 3 in a secondary battery according to still another reference embodiment; and
FIG. 12 is a sectional view illustrating components corresponding to those of the secondary battery shown in FIG. 3 in a secondary battery according to still another reference embodiment.

### DETAILED DESCRIPTION

The present invention will now be described in detail with reference to embodiments thereof and to reference embodiments that aid the understanding of the present invention.

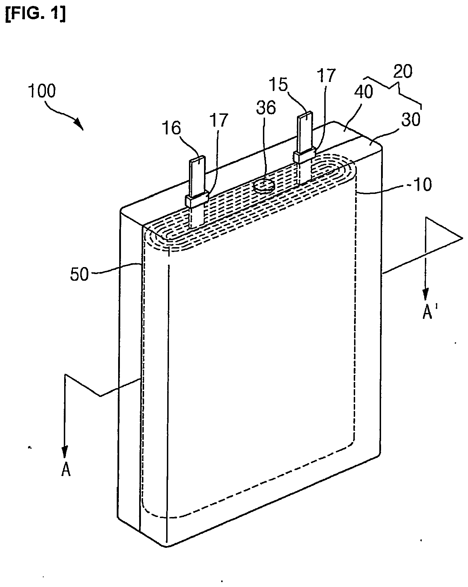

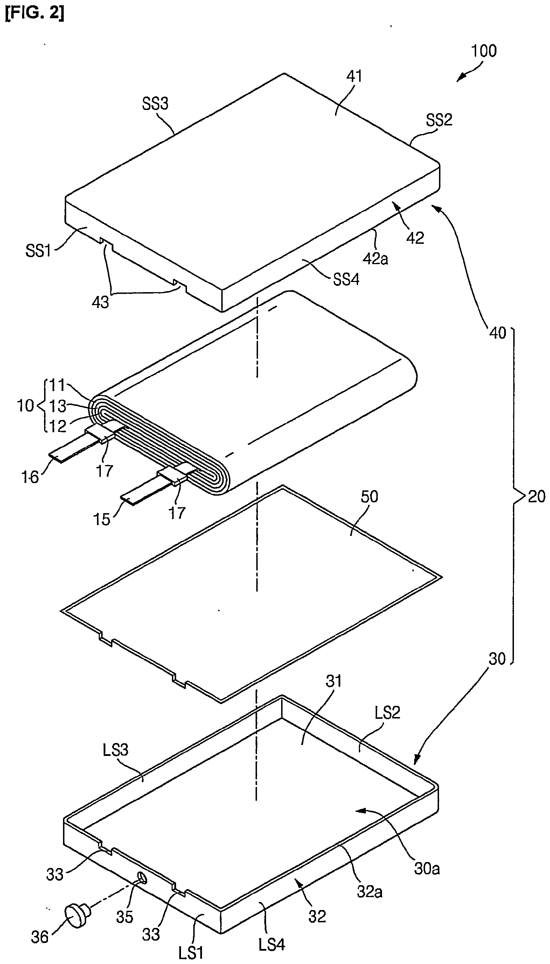

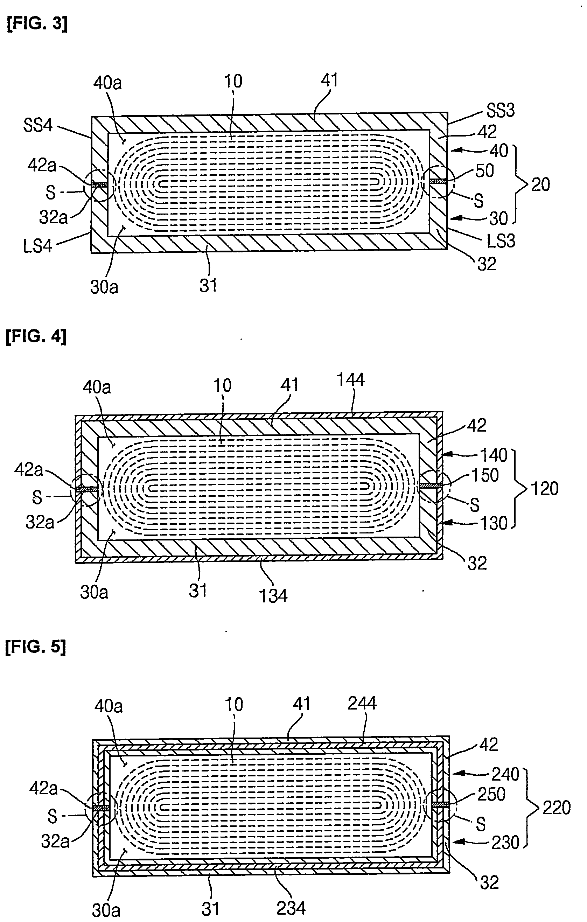

FIG. 1 is an assembled perspective view of a secondary battery according to a reference embodiment, FIG. 2 is a disassembled perspective view of the secondary battery shown in FIG. 1, and FIG. 3 is a sectional view taken along line A-A' of FIG. 1.

Referring to FIGS. 1 and 2, the secondary battery 100 includes an electrode assembly 10, a hard case 20 and a thermal adhesion layer 50. The secondary battery 100 is electrically connected to an external electric device (not shown) to perform a charging operation when supplied with power, or a discharging operation to supply power.

The electrode assembly 10 is formed by winding or stacking a laminate of a first electrode plate 11, a separator 13, and a second electrode plate 12, which are formed as a thin plate or layer. In addition, the electrode assembly 10 includes electrode tabs, that is, a first electrode tab 15 and a second electrode tab 16. Here, the outer surface of the electrode assembly 10 may have a rounded profile.

The first electrode plate 11 includes a first electrode collector formed of an aluminum foil, and a first electrode active material coated on the first electrode collector. Lithium cobalt oxide (LiCoO₂) may be used as the first electrode active material.

The second electrode plate 12 includes a second electrode collector formed of a copper foil, and a second electrode active material coated on the second electrode collector. Carbon may be used as the second electrode active material.

The first electrode plate 11 may operate as a positive electrode and the second electrode plate 12 may operate as a negative electrode. The first electrode plate 11 and the second electrode plate 12 may have different polarities.

The separator 13 may be made of polyethylene, polypropylene, or a copolymer of polyethylene and polypropylene. The separator 13 is preferably formed to have a width greater than the first electrode plate 11 or the second electrode plate 12, which is advantageous in preventing an electrical short-circuit between the electrode plates 11 and 12.

The first electrode tab 15 and the second electrode tab 16 extending from the first electrode plate 11 and the second electrode plate 12 electrically connect the electrode assembly 10 to an external device (not shown). Insulating tapes 17 for preventing short-circuits between the first electrode tab 15 and the second electrode tab 16 are disposed on boundary portions of the first electrode tab 15 and the second electrode tab 16, which extend through a hard case 20.

The hard case 20 accommodates the electrode assembly 10 and an electrolyte (not shown), and includes a first case portion 30 and a second case portion 40. The hard case 20 surrounds the electrode assembly 10 to protect the same from the outside. Here, the electrolyte is impregnated into the electrode assembly 10 and disposed between the hard case 20 and electrode assembly 10.

The first case portion 30 is shaped as a box having one surface opened to accommodate the electrode assembly 10. In detail, the first case portion 30 includes a first bottom surface 31, a first lateral wall 32 extending from the edge of the first bottom surface 31, and first grooves 33 formed at portions of the first lateral wall 32 to allow the first electrode tab 15 and the second electrode tab 16 to pass. Here, a first lead-out surface LS1 of the first lateral wall 32, from which the first electrode tab 15 and the second electrode tab 16 are drawn out, a first opposite surface LS2 facing and opposite to the first lead-out surface LS1, and first connection surfaces LS3 and LS4 connected to the first lead-out surface LS1 and the first opposite surface LS2 are at right angles with respect to the first bottom surface 31, respectively, which is to facilitate a formation process of the first case portion 30.

In addition, the first case portion 30 includes an electrolyte injection hole 35 through which the electrolyte (not shown) is injected into the hard case 20. The electrolyte injection hole 35 is sealed by a plug 36. The electrolyte injection hole 35 may instead be formed in the second case portion 40, and the formation location of the electrolyte injection hole 35 is not limited to the illustrated example. Meanwhile, a space of the first case portion 30 in which a portion of the electrode assembly 10 is accommodated is referred to as the first space 30a.

Like the first case portion 30, the second case portion 40 is shaped as a box having one surface opened to accommodate the electrode assembly 10. In detail, the second case portion 40 includes a second bottom surface 41, a second lateral wall 42 extending from the edge of the second bottom surface 41, and second grooves 43 formed at portions of the second lateral wall 42 to allow the first electrode tab 15 and the second electrode tab 16 to pass. Here, a second lead-out surface SS1 of the second lateral wall 42, from which the first electrode tab 15 and the second electrode tab 16 are drawn out, a second opposite surface SS2 facing and opposite to the second lead-out surface SS1, and second connection surfaces SS3 and SS4 connected to the second lead-out surface SS1 and the second opposite surface SS2 are at right angles with respect to the second bottom surface 41, respectively, which is to facilitate a formation process of the second case portion 40.

Meanwhile, a space of the second case portion 40 in which the remaining portion of the electrode assembly 10 is accommodated is referred to as a second space 40a.

In order to increase the resistance of the hard case 20 against external impacts, the first case portion 30 and the second case portion 40 may be formed of a plastic resin that is resistant against external impacts and lightweight, that is, at least one selected from the group consisting of polyolefine-based resin, epoxy resin, polycarbonate resin, polyethyleneterephthalate resin, polyetheretherketone resin, high-density polyethylene resin, and acryl-based resin. Examples of the polyolefine-based resin may include polypropylene resin and polyethylene resin. Examples of the acryl-based resin may include polymethlymethacrylate resin. Here, materials for forming the first case portion 30 and the second case portion 40 may have a hardness of not less than 55 on the Rockwell R scale, so as to have a scratch-proof property, which, results in reducing poor external appearance of the hard case 20. In addition, internal surfaces of the first case portion 30 and the second case portion 40 may be constructed so as not to react with the electrolyte, or subjected to surface treatment. Further, each of the first case portion 30 and the second case portion 40 has a thickness of approximately 0.5 mm or greater, so as to maintain the mechanical strength against external impacts after they are coupled to each other. Here, upper limits in thicknesses of the first case portion 30 and the second case portion 40 are not defined, because the respective thicknesses of the first case portion 30 and the second case portion 40 may vary according to the materials forming the same and the intended usage of the secondary battery once manufactured.

The first case portion 30 and the second case portion 40 are formed separately by injection molding.

The thermal adhesion layer 50, as illustrated in FIG. 3, is disposed at a contacting area S of the first case portion 30 and the second case portion 40. In detail, the thermal adhesion layer 50 disposed between an end surface 32a of the first lateral wall 32 and an end surface 42a of the second lateral wall 42 in a continuous, indiscrete manner. The phrase "in a continuous, indiscrete manner" used herein means that no other element exists between the end surface 32a of the first lateral wall 32 and the end surface 42a of the second lateral wall 42. The thermal adhesion layer 50 is a casted polypropylene film-like layer, which is disposed at the end surface 32a of the first lateral wall 32 or the end surface 42a of the second lateral wall 42, and couples the first case portion 30 and the second case portion 40 to each other by thermal bonding. Since the thermal adhesion layer 50 is subjected to thermal bonding in a state in which it is disposed between the end surface 32a of the first lateral wall 32 and the end surface 42a of the second lateral wall 42 in a continuous, indiscrete manner, the sealing efficiency of the first case portion 30 and the second case portion 40 can be enhanced. Here, the thermal adhesion layer 50 is made of a material that is bonded by heat of approximately 130°C or higher, and examples thereof may include any one selected from modified polyolefine based materials and acid-modified polyolefine based materials. Examples of the modified polyolefine based materials may include modified polypropylene, and examples of the acid-modified polyolefine based materials may include acid-modified polypropylene.

Meanwhile, materials for forming the first case portion 30 and the second case portion 40 may have a higher melting point than those for forming the thermal adhesion layer 50. If the materials for forming the first case portion 30 and the second case portion 40 have a lower melting point than those for forming the thermal adhesion layer 50, the first case portion 30 and the second case portion 40 may be melted by heat for bonding the thermal adhesion layer 50.

As described above, in the secondary battery 100, the hard case 20 surrounding the electrode assembly 10 is formed using a plastic resin that is lightweight and resistant against external impacts, thereby increasing the resistance against external impacts and realizing lightness in a simplified manner, compared to the conventional battery in which an electrode assembly is surround by an aluminum can or wrapped by a pouch formed of an aluminum composite material, which involves quite a complex process.

In addition, since the secondary battery 100 includes the hard case 20 constituted by the first case portion 30 and the second case portion 40, which are coupled to each other by thermal bonding using the thermal adhesion layer 50, the sealing efficiency of the hard case 20 can be enhanced, compared to the conventional secondary battery in which cases are coupled to each other by ultrasonic welding.

A secondary battery according to another reference embodiment will now be described.

FIG. 4 is a sectional view illustrating components corresponding to those of the secondary battery shown in FIG. 3 in a secondary battery according to another reference embodiment.

The secondary battery according to the current reference embodiment is substantially the same as the secondary battery 100 shown in FIG. 2 in view of configuration and functions, except for the configurations of a hard case 120 and a thermal adhesion layer 150. Thus, repetitive explanations will be omitted and the following description will be focused on the hard case 120 and the thermal adhesion layer 150.

Referring to FIG. 4, the hard case 120 includes a first case portion 130 and a second case portion 140. The hard case 120 is substantially the same as the hard case 20 shown in FIG. 3, except that the first case portion 130 of the hard case 120 further includes a first metal layer 134 formed on the outer surface thereof, and the second case portion 140 further includes a second metal layer 144 formed on the outer surface thereof.

Each of the first metal layer 134 and the second metal layer 144 may be made of a metallic material, and examples thereof may include any one selected from aluminum (Al), nickel (Ni), iron (Fe) and copper (Cu). The first metal layer 134 and the second metal layer 144 can effectively prevent external moisture from being infiltrated into the hard case 120. In addition, the first metal layer 134 and the second metal layer 144 can prevent the electrolyte accommodated in the hard case 120 from leaking outside. Further, the first metal layer 134 and the second metal layer 144 can further enhance the strength of the hard case 120 against external impacts.

The thermal adhesion layer 150 is substantially the same as the thermal adhesion layer 50 shown in FIG. 3, except that the thermal adhesion layer 150 is larger than the thermal adhesion layer 50 shown in FIG. 3, so as to couple the first case portion 130 including the first metal layer 134 and the second case portion 140 including the second metal layer 144 to each other.

As described above, in the secondary battery according to this further reference embodiment, the first metal layer 134 and the second metal layer 144 are further formed on outer surfaces of the first case portion 130 and the second case portion 140, respectively, thereby effectively preventing internal components from corroding due to infiltration of moisture. In addition, malfunctions in charging and discharging operations due to electrolyte leakage can be effectively prevented. Further, the electrode assembly 10 can be protected from external impacts more efficiently.

A secondary battery according to still another reference embodiment will now be described.

FIG. 5 is a sectional view illustrating components corresponding to those of the secondary battery shown in FIG. 3 in a secondary battery according to still another reference embodiment.

The secondary battery according to the current reference embodiment is substantially the same as the secondary battery 100 shown in FIG. 2 in view of configuration and functions, except for the configurations of a hard case 220 and a thermal adhesion layer 250. Thus, repetitive explanations will be omitted and the following description will be focused on the hard case 220 and the thermal adhesion layer 250.

Referring to FIG. 5, the hard case 220 includes a first case portion 230 and a second case portion 240. The hard case 220 is substantially the same as the hard case 120 shown in FIG. 4, except that the first case portion 230 of the hard case 220 further includes a first metal layer 234 formed therein, and the second case portion 240 further includes a second metal layer 244 formed therein.

The first metal layer 234 and the second metal layer 244 can enhance the efficiency of coupling the first case portion 230 and the second case portion 240 to each other. In addition, the first metal layer 234 and the second metal layer 244 can prevent external moisture from being infiltrated into the hard case 220 or the electrolyte accommodated in the hard case 220 from leaking outside. Further, the first metal layer 234 and the second metal layer 244 can further enhance the strength of the hard case 220 against external impacts. In the reference embodiment shown in FIG. 5, the first metal layer 234 is thinner than a portion of the first case portion 230, the portion excluding the first metal layer 234 from the first case portion 230, and the second metal layer 244 is thinner than a portion of the second case portion 240, the portion excluding the second metal layer 244 from the second case portion 240. Alternatively, however, in order to further enhance the strength of the hard case 220 against external impacts, the first metal layer 234 may be formed to be thicker than a portion of the first case portion 230, the portion excluding the first metal layer 234 from the first case portion 230, and the second metal layer 244 may be formed to be thicker than a portion of the second case portion 240, the portion excluding the second metal layer 244 from the second case portion 240.

The thermal adhesion layer 250 is substantially the same as the thermal adhesion layer 50 shown in FIG. 3, except that the thermal adhesion layer 250 is larger than the thermal adhesion layer 50 shown in FIG. 3 so as to couple the first case portion 230 including the first metal layer 234 and the second case portion 240 including the second metal layer 244 to each other.

As described above, in the secondary battery according to this reference embodiment, the first metal layer 234 and the second metal layer 244 are further formed in the first case portion 230 and the second case portion 240, respectively, thereby allowing the first metal layer 234 and the second metal layer 244 to be coupled to the first case portion 230 and the second case portion 240, respectively, in a more secured manner. In addition, it is possible to effectively prevent internal components from corroding due to infiltration of moisture. In addition, malfunctions in charging and discharging operations due to electrolyte leakage can be effectively prevented. Further, the electrode assembly 10 can be protected from external impacts more efficiently.

A secondary battery according to still another reference embodiment will now be described.

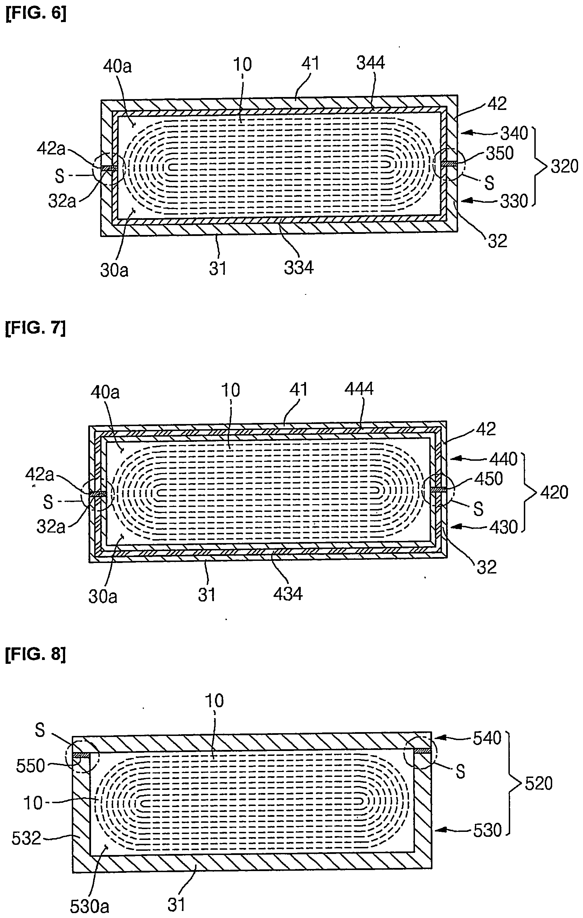

FIG. 6 is a sectional view illustrating components corresponding to those of the secondary battery shown in FIG. 3 in a secondary battery according to still another reference embodiment.

The secondary battery according to the current reference embodiment is substantially the same as the secondary battery 100 shown in FIG. 2 in view of configuration and functions, except for the configurations of a hard case 320 and a thermal adhesion layer 350. Thus, repetitive explanations will be omitted and the following description will be focused on the hard case 320 and the thermal adhesion layer 350.

Referring to FIG. 6, the hard case 320 includes a first case portion 330 and a second case portion 340. The hard case 320 is substantially the same as the hard case 120 shown in FIG. 4, except that the first case portion 330 of the hard case 320 further includes a first metal layer 334 formed on the inner surface thereof, and the second case portion 340 further includes a second metal layer 344 formed on the inner surface thereof. The first metal layer 334 and the second metal layer 344 can effectively prevent the electrolyte accommodated in the hard case 320 from leaking outside. In addition, the first metal layer 334 and the second metal layer 344 can prevent external moisture from being infiltrated into the hard case 320. The strength of the hard case 320 against external impacts can further be enhanced.

The thermal adhesion layer 350 is substantially the same as the thermal adhesion layer 50 shown in FIG. 3, except that the thermal adhesion layer 350 is larger than the thermal adhesion layer 50 shown in FIG. 3 so as to couple the first case portion 330 including the first metal layer 334 and the second case portion 340 including the second metal layer 344 to each other.

As described above, in the secondary battery according to this reference embodiment, the first metal layer 334 and the second metal layer 344 are further formed on inner surfaces of the first case portion 330 and the second case portion 340, respectively, thereby effectively preventing charging and discharging operations from malfunctioning due to electrolyte leakage. In addition, it is possible to effectively prevent internal components from corroding due to infiltration of moisture. Further, the electrode assembly 10 can be protected from external impacts more efficiently.

A secondary battery according to an embodiment of the present invention will now be described.

FIG. 7 is a sectional view illustrating components corresponding to those of the secondary battery shown in FIG. 3 in a secondary battery according to an embodiment of the present invention.

The secondary battery according to the current embodiment is substantially the same as the secondary battery 100 shown in FIG. 2 in view of configuration and functions, except for the configurations of a hard case 420 and a thermal adhesion layer 450. Thus, repetitive explanations will be omitted and the following description will be focused on the hard case 420 and the thermal adhesion layer 450.

Referring to FIG. 7, the hard case 420 includes a first case portion 430 and a second case portion 440. The hard case 420 is substantially the same as the hard case 20 shown in FIG. 3, except that the first case portion 430 of the hard case 420 further includes a first thermal conduction layer 434 formed therein, and the second case portion 440 further includes a second thermal conduction 444 formed therein.

Each of the first thermal conduction layer 434 and the second thermal conduction layer 444 may be formed by impregnating a thermally conductive material into a base having a high tensile strength and heat resistance. For example, each of the first thermal conduction layer 434 and the second thermal conduction layer 444 may be formed by impregnating ceramic powder into polymer fiber or non-woven fabric. The first thermal conduction layer 434 and the second thermal conduction layer 444 may reinforce the strength of the hard case 420 by using polymer fiber or non-woven fabric while preventing a temperature of the secondary battery from partially rising by transmitting the internal heat generated from the secondary battery evenly all over the hard case 420 using ceramic powder.

The thermal adhesion layer 450 is substantially the same as the thermal adhesion layer 50 shown in FIG. 3, except that the thermal adhesion layer 450 is larger than the thermal adhesion layer 50 shown in FIG. 3 so as to couple the first case portion 430 including the first metal layer 434 and the second case portion 440 including the second metal layer 444 to each other.

As described above, in the secondary battery according to an embodiment of the present invention, the first thermal conduction layer 434 and the second thermal conduction layer 444 are further formed in the first case portion 430 and the second case portion 440, respectively, thereby protecting the electrode assembly 10 from external impacts more efficiently. In addition, it is possible to prevent a life characteristic of the secondary battery from deteriorating due to a partial temperature rise.

A secondary battery according to still another reference embodiment will now be described.

FIG. 8 is a sectional view illustrating components corresponding to those of the secondary battery shown in FIG. 3 in a secondary battery according to still another reference embodiment.

The secondary battery according to the current reference embodiment is substantially the same as the secondary battery 100 shown in FIG. 2 in view of configuration and functions, except for the configurations of a hard case 520 and a thermal adhesion layer 550. Thus, repetitive explanations will be omitted and the following description will be focused on the hard case 520 and the thermal adhesion layer 550.

Referring to FIG. 8, the hard case 520 includes a first case portion 530 having a first bottom surface 531 and a first lateral wall 532, and a second case portion 540. The hard case 520 is substantially the same as the hard case 20 shown in FIG. 3, except that the first case portion 530 of the hard case 520 is formed with a box shape, and the second case portion 540 is formed with a plate shape.

The first case portion 530 and the second case portion 540 having the aforementioned configurations facilitate alignment when they are coupled to each other. Here, the first case portion 530 has a first lateral wall 532 having a height greater than a height of the first lateral wall 32 of the first case portion 30 shown in FIG. 3, providing for a first space 530a for accommodating the electrode assembly 10 entirely in the first hard case 530.

As described above, the secondary battery according to a this reference embodiment includes the first case portion 530 that is box-shaped, and the second case portion 540 that is plate-shaped, thereby enabling the hard case 520 to be manufactured in a simplified manner.

A secondary battery according to still another reference embodiment will now be described.

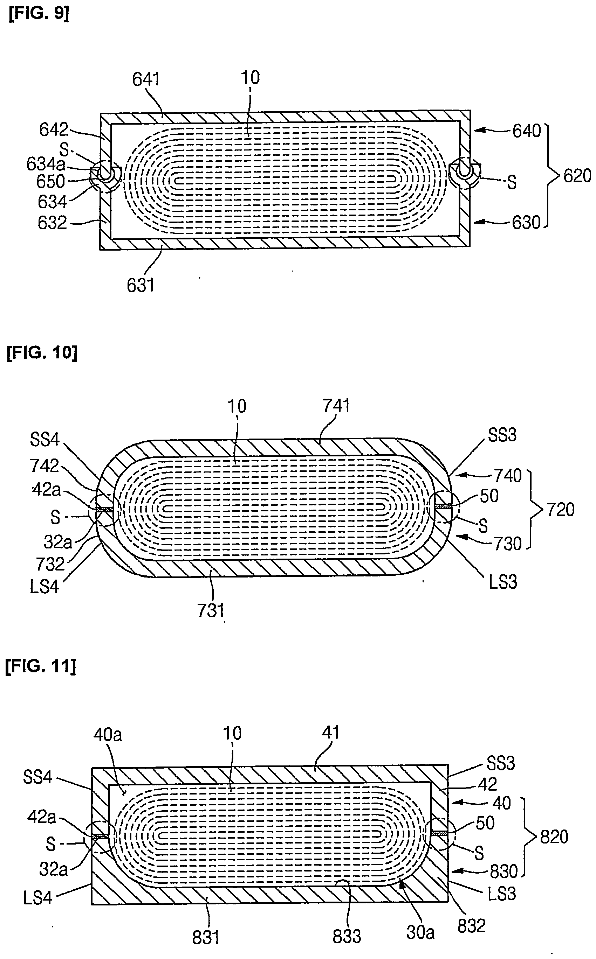

FIG. 9 is a sectional view illustrating components corresponding to those of the secondary battery shown in FIG. 3 in a secondary battery according to still another reference embodiment.

The secondary battery according to the current reference embodiment is substantially the same as the secondary battery 100 shown in FIG. 2 in view of configuration and functions, except for the configurations of a hard case 620 and a thermal adhesion layer 650. Thus, repetitive explanations will be omitted and the following description will be focused on the hard case 620 and the thermal adhesion layer 650.

Referring to FIG. 9, the hard case 620 includes a first case portion 630 and a second case portion 640. The hard case 620 is substantially the same as the hard case 20 shown in FIG. 3, except that the first and second case portions 630 and 640 of the hard case 620 have thicknesses, for example, 0.3 mm or greater, which are smaller than those of the first and second case portions 30 and 40 shown in FIG. 3. This is because the first case portion 630 has an accommodating portion 634, accommodating ends of lateral walls 642 of the second case portion 640, at contacting areas S where the first case portion 630 and the second case portion 640 make contact. That is to say, the coupling between the first case portion 630 and the second case portion 640 can be securely supported by the accommodating portion 634. Here, upper limits in thicknesses of the first case portion 630 and the second case portion 640 are not defined because the respective thicknesses of the first case portion 630 and the second case portion 640 may vary according to materials forming the same and usage of secondary battery manufactured. In detail, the accommodating portion 634 has channels 634a formed at ends of first lateral walls 632 so as to accommodate ends of the second case portion 640. The ends of the second lateral wall 642 correspond to the channels 634a formed in the accommodating portion 634 so as to be smoothly accommodated in the channel 634a of the accommodating portion 634.

The thermal adhesion layer 650 is substantially the same as the thermal adhesion layer 50 shown in FIG. 3, except that the thermal adhesion layer 650 is accommodated in the groove 634a of the accommodating portion 634.

As described above, in the secondary battery according to still another reference embodiment, the hard case 620 is formed such that the first case portion 630 having the accommodating portion 634, and the second case portion 640, are formed thinly respectively, thereby increasing the size of the electrode assembly 10 in the secondary battery of the same size, ultimately increasing the battery capacity.

Next, a secondary battery according to still another reference embodiment will be described.

FIG. 10 is a sectional view illustrating components corresponding to those of the secondary battery shown in FIG. 3 in a secondary battery according to still another reference embodiment.

The secondary battery according to the current reference embodiment is substantially the same as the secondary battery 100 shown in FIG. 2 in view of configuration and functions, except for the configurations of a hard case 720. Thus, repetitive explanations will be omitted and the following description will be focused on the hard case 720.

Referring to FIG. 10, the hard case 720 includes a first case portion 730 having a first bottom surface 731 and a first lateral wall 732, and a second case portion 740 having a second bottom surface 741 and a second lateral wall 742.

The hard case 720 is substantially the same as the hard case 20 shown in FIG. 3. However, in the first case portion 730 of the hard case 720, each of first connection surfaces LS3 and LS4 of the first lateral wall 732 has a rounded corner, where each of the first connection surfaces LS3 and LS4 and the first bottom surface 731 meet, which is to reduce an unnecessary dead space from the first case portion 730 between the electrode assembly 10 and the first case portion 730, the first connection surfaces LS3 and LS4 being connected to a first lead-out surface LS1, from which the first electrode tab 15 and the second electrode tab 16 are drawn out, and a first opposite surface LS2 facing and opposite to the first lead-out surface LS1. In addition, a first inner surface 733 of the first case portion 730 has a rounded inner profile that substantially matches the outer profile of the electrode assembly 10.

In addition, in the second case portion 740 of the hard case 720, each of second connection surfaces SS3 and SS4 of the second lateral wall 742 has a rounded corner, where each of the second connection surfaces SS3 and SS4 and the second bottom surface 741 meet, which is to reduce an unnecessary dead space from the second case portion 740 between the electrode assembly 10 and the second case portion 740, the second connection surfaces SS3 and SS4 being connected to a second lead-out surface SS1, from which the first electrode tab 15 and the second electrode tab 16 are drawn out, and a second opposite surface SS2 facing and opposite to the second lead-out surface SS1. In addition, a second inner surface 743 of the second case portion 740 has a rounded inner profile that substantially matches the outer profile of the electrode assembly 10.

As described above, in the secondary battery according to this reference embodiment, the hard case 720 having the aforementioned configuration, including the first case portion 730 and the second case portion 740, is provided, thereby increasing resistance against external impacts reducing consumption of electrolyte due to a dead space existing between the hard case 720 and the electrode assembly 10 and preventing the electrode assembly 10 from moving inside the hard case 720 by eliminating the unnecessary dead space.

Meanwhile, although not illustrated in the drawing, the shape of the hard case 720 as shown in FIG. 10 may also be applied to the hard cases 120, 220, 320, 420, and 620 shown in FIGS. 4, 5, 6, 7, and 9, respectively.

A secondary battery according to still another reference embodiment will now be described.

FIG. 11 is a sectional view illustrating components corresponding to those of the secondary battery shown in FIG. 3 in a secondary battery according to still another reference embodiment.

The secondary battery according to the current reference embodiment is substantially the same as the secondary battery 100 shown in FIG. 2 in view of configuration and functions, except for the configurations of a hard case 820. Thus, repetitive explanations will be omitted and the following description will be focused on the hard case 820.

Referring to FIG. 11, the hard case 820 includes a first case portion 830 having a first bottom surface 831 and a first lateral wall 832, and a second case portion 40 having a second bottom surface 41 and a second lateral wall 42.

The hard case 820 is substantially the same as the hard case 20 shown in FIG. 3, except that a first inner surface 833 of the first case portion 830 has a rounded inner profile that substantially matches the outer profile of an electrode assembly 10.

As described above, in the secondary battery according to this another reference embodiment, the hard case 820 includes the first case portion 830 and the second case portion 40, thereby reducing a waste of electrolyte due to a dead space between the hard case 820 and the electrode assembly 10 and preventing the electrode assembly 10 from moving inside the hard case 820 by eliminating the dead space.

Meanwhile, although not illustrated in the drawing, the shapes of the hard case 820 including the first hard case portion 830 and the second hard case portion 40, as shown in FIG. 11, may also be applied to the hard cases 120, 220, 320, 420, and 620 shown in FIGS. 4, 5, 6, 7, and 9, respectively.

A secondary battery according to still another reference embodiment will now be described.

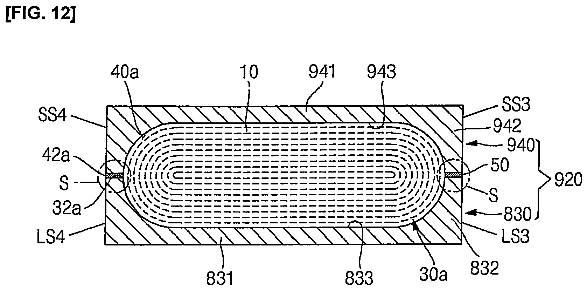

FIG. 12 is a sectional view illustrating components corresponding to those of the secondary battery shown in FIG. 3 in a secondary battery according to still another reference embodiment.

The secondary battery according to the current reference embodiment is substantially the same as the secondary battery 100 shown in FIG. 2 in view of configuration and functions, except for the configurations of a hard case 920. Thus, repetitive explanations will be omitted and the following description will be focused on the hard case 920.

Referring to FIG. 12, the hard case 920 includes a first case portion 830 having a first bottom surface 831 and a first lateral wall 832, and a second case portion 940 having a second bottom surface 941 and a second lateral wall 942.

The hard case 920 is substantially the same as the hard case 20 shown in FIG. 3, except that first and second inner surfaces 833 and 943 of the first and second case portions 830 and 940 have rounded inner profiles that substantially match the outer profile of an electrode assembly 10, respectively.

As described above, in the secondary battery according to this reference embodiment, the hard case 920 includes the first case portion 830 and the second case portion 940, thereby reducing a waste of electrolyte due to a dead space between the hard case 820 and the electrode assembly 10 and preventing the electrode assembly 10 from moving inside the hard case 920 by eliminating the dead space.

Meanwhile, although not illustrated in the drawing, the shapes of the hard case 920 including the first case portion 830 and the second case portion 940, as shown in FIG. 12, may also be applied to the hard cases 120, 220, 320, 420, and 620 shown in FIGS. 4, 5, 6, 7, and 9, respectively.

Although the present invention has been described with reference to certain exemplary embodiments thereof, it will be understood by those skilled in the art that a variety of modifications and variations may be made to the present invention without departing from the scope of the present invention defined in the appended claims, and their equivalents.

## Claims

1. A secondary battery comprising:
an electrode assembly;
a case accommodating the electrode assembly and comprising first and second case portions; and
an adhesion layer interposed between the first and second case portions and adhering to a respective surface of each of the case portions in such a manner as to secure a connection between them,
wherein at least one of the case portions is at least partially formed from at least one of a polyolefine-based resin, an epoxy resin, a polycarbonate resin, a polyethyleneterephthalate resin, a polyetheretherketone resin, a high-density polyethylene resin, and an acryl-based resin,
wherein the resin is situated in a layer and the or each case portion also comprises a thermal conduction layer formed therein, wherein the thermal conduction layer is formed by impregnating ceramic powder into polymer fibre or non-woven fabric, and
wherein each of the first and second case portions has a box-like structure, one of the first and second case portions has a channel situated on an edge of a lateral wall of the case portion, which edge surface faces the other case portion, the said adhesion layer is located within the channel, and an edge region of a lateral wall of the other of the first and second case portions is received within the channel and in contact with the adhesion layer and wherein at least one of the first and second case portions has a hardness of not less than 55 on the Rockwell R scale.

2. A secondary battery according to Claim 1, wherein the adhesion layer is continuous.

3. A secondary battery according to Claim 1 or 2, wherein the electrode assembly has a jelly-roll configuration and at least one of the first and second case portions has a rounded inner profile that substantially matches the outer profile of the electrode assembly.

4. A secondary battery according to Claim 3, wherein the resin is situated in a layer and the or each case portion also comprises a metal layer.

5. A secondary battery according to Claim 4, wherein the metal layer is situated on an inner surface of the resin layer or on an outer surface of the resin layer or is embedded within the resin layer.

6. A secondary battery according to any proceeding claims, wherein respective surface of each case portion is connected to the adhesion layer.

7. A secondary battery according to any preceding claim, wherein the adhesion layer is a thermal adhesion layer made from a material that is bonded by heat of 130° C or higher.

8. A secondary battery according to Claim 7 when dependent upon Claim 4 or 5, wherein the case has a higher melting point than the thermal adhesion layer.

9. A secondary battery according to any preceding claim, wherein the adhesion layer comprises a polyolefine-based material or an acid-modified polyolefine-based material.

10. A secondary battery according to any preceding claim, wherein an electrolyte of the secondary battery is in contact with the first and second case portions.

## Patentansprüche

1. Sekundärbatterie, Folgendes beinhaltend:
eine Elektrodenanordnung;
ein Gehäuse, welches die Elektrodenanordnung aufnimmt und einen ersten und einen zweiten Gehäuseabschnitt beinhaltet; und
eine zwischen dem ersten Gehäuseabschnitt und dem zweiten Gehäuseabschnitt zwischengeschaltete Klebeschicht, welche an einer jeweiligen Oberfläche jedes der Gehäuseabschnitte in einer Weise haftet, dass eine Verbindung dazwischen gesichert wird,
wobei mindestens einer der Gehäuseabschnitte mindestens teilweise aus mindestens einem von einem polyolefinbasierenden Harz, einem Epoxidharz, einem Polycarbonatharz, einem Polyethylenterephthalatharz, einem Polyetheretherketonharz, einem hochdichten Polyethylenharz und einem acrylbasierenden Harz gebildet ist,
wobei das Harz in einer Schicht befindlich ist, und der oder jeder Gehäuseabschnitt eine hierin gebildete Wärmeleitschicht beinhaltet, wobei die Wärmeleitschicht durch Imprägnieren von Keramikpulver in Polymerfasern oder Vliesstoff gebildet wird, und
wobei jeder des ersten und des zweiten Gehäuseabschnittes eine boxartige Struktur aufweist, einer des ersten und des zweiten Gehäuseabschnittes einen Kanal aufweist, welcher an einer Kante einer Seitenwand des Gehäuseabschnittes befindlich ist, wobei die Kantenoberfläche dem anderen Gehäuseabschnitt zugewandt ist, wobei die Klebeschicht innerhalb des Kanals befindlich ist, und ein Kantenbereich einer Seitenwand des anderen des ersten und des zweiten Gehäuseabschnittes innerhalb des Kanals aufgenommen wird und in Kontakt mit der Klebeschicht steht und wobei mindestens einer des ersten und des zweiten Gehäuseabschnittes eine Härte von nicht unter 55 auf der Härteskala Rockwell R aufweist.

2. Sekundärbatterie nach Anspruch 1, bei welcher die Klebeschicht durchgängig ist.

3. Sekundärbatterie nach Anspruch 1 oder 2, bei welcher die Elektrodenanordnung eine Jelly-roll-Konfiguration aufweist und mindestens einer des ersten und des zweiten Gehäuseabschnittes ein abgerundetes inneres Profil besitzt, welches im Wesentlichen mit dem äußeren Profil der Elektrodenanordnung übereinstimmt.

4. Sekundärbatterie nach Anspruch 3, bei welcher das Harz in einer Schicht befindlich ist und der oder jeder Gehäuseabschnitt ebenfalls eine Metallschicht beinhaltet.

5. Sekundärbatterie nach Anspruch 4, bei welcher die Metallschicht an einer inneren Oberfläche der Harzschicht oder an einer äußeren Oberfläche der Harzschicht befindlich oder in die Harzschicht eingebettet ist.

6. Sekundärbatterie nach einem der vorhergehenden Ansprüche, bei welcher die jeweilige Oberfläche jedes Gehäuseabschnittes mit der Klebeschicht verbunden ist.

7. Sekundärbatterie nach einem der vorhergehenden Ansprüche, bei welcher die Klebeschicht eine thermische Klebeschicht ist, welche aus einem Material besteht, welches bei einer Hitze von 130° C oder darüber gebondet wird.

8. Sekundärbatterie nach Anspruch 7 in Abhängigkeit von Anspruch 4 oder 5, bei welcher das Gehäuse einen höheren Schmelzpunkt aufweist als die thermische Klebeschicht.

9. Sekundärbatterie nach einem der vorhergehenden Ansprüche, bei welcher die Klebeschicht ein polyolefinbasierendes Material oder ein säuremodifiziertes polyolefinbasierendes Material beinhaltet.

10. Sekundärbatterie nach einem der vorhergehenden Ansprüche, bei welcher ein Elektrolyt der Sekundärbatterie in Kontakt mit dem ersten und dem zweiten Gehäuseabschnitt steht.

## Revendications

1. Batterie secondaire comprenant:
un ensemble formant électrodes,
un boîtier dans lequel loge l'ensemble formant électrodes, et comprenant des première et seconde parties de boîtier, et
une couche d'adhérence intercalée entre les première et seconde parties de boîtier et adhérant à une surface respective de chacune des parties de boîtier de manière à assurer une connexion entre elles ;
et dans laquelle au moins une des parties de boîtier est au moins partiellement réalisée à partir de résine à base de polyoléfine, de résine époxyde, de résine de polycarbonate, de résine de polyéthylène-téréphtalate, de résine de polyéther-éther-cétone, de résine de polyéthylène haute densité et/ou de résine à base d'acryle,
dans laquelle la résine est située dans une couche et la ou chaque partie de boîtier comprend également une couche de conduction thermique qui y est formée, ladite couche de conduction thermique étant formée par imprégnation de poudre céramique dans un tissu en fibres polymères ou un non tissé, et
dans laquelle chacune des première et seconde parties de boîtier présente une structure en forme de boîte, l'une des première et seconde parties de boîtier présente une rigole située sur un bord d'une paroi latérale de la partie de boîtier, la surface dudit bord est tournée vers l'autre partie de boîtier, ladite couche d'adhérence est disposée à l'intérieur de la rigole, et une zone de bord d'une paroi latérale de l'autre des première et seconde parties de boîtier est reçue à l'intérieur de la rigole et est en contact avec la couche d'adhérence, au moins l'une des première et seconde parties de boîtier présentant une dureté non inférieure à 55 sur l'échelle R de Rockwell.

2. Batterie secondaire selon la revendication 1, dans laquelle la couche d'adhérence est continue.

3. Batterie secondaire selon la revendication 1 ou 2, dans laquelle l'ensemble formant électrodes a une configuration de gâteau roulé et l'une au moins des première et seconde parties de boîtier présente un profil intérieur arrondi correspondant sensiblement au profil extérieur de l'ensemble formant électrodes.

4. Batterie secondaire selon la revendication 3, dans laquelle la résine est située dans une couche et la ou chaque partie de boîtier comprend également une couche de métal.

5. Batterie secondaire selon la revendication 4, dans laquelle la couche de métal est située sur une surface intérieure de la couche de résine ou sur une surface extérieure de la couche de résine ou est noyée dans la couche de résine.

6. Batterie secondaire selon l'une quelconque des revendications précédentes, dans laquelle la surface respective de chaque partie de boîtier est connectée à la couche d'adhérence.

7. Batterie secondaire selon l'une quelconque des revendications précédentes, dans laquelle la couche d'adhérence est une couche d'adhérence thermique réalisée à partir d'un matériau qui est collé sous une chaleur de 130 °C ou plus.

8. Batterie secondaire selon la revendication 7, lorsqu'elle dépend de la revendication 4 ou 5, dans laquelle le boîtier présente un point de fusion supérieur à celui de la couche d'adhérence thermique.

9. Batterie secondaire selon l'une quelconque des revendications précédentes, dans laquelle la couche d'adhérence comprend une matière à base de polyoléfine ou une matière à base de polyoléfine modifiée à l'acide.

10. Batterie secondaire selon l'une quelconque des revendications précédentes, dans laquelle un électrolyte de la batterie secondaire est en contact avec les première et seconde parties de boîtier.
